# EUROPÄISCHE PATENTSCHRIFT

(11) **EP 1 638 887 B1**
(45) Veröffentlichungstag und Bekanntmachung des Hinweises auf die Patenterteilung: **14.03.2012**
(21) Anmeldenummer: 04739691.6
(22) Anmeldetag: 08.06.2004
(51) Int. Cl.: C01B 21/26, C01B 21/28

(54) **VERFAHREN ZUR ENTFERNUNG VON N2O BEI DER SALPETERSÄUREHERSTELLUNG**
METHOD FOR REMOVING N2O DURING THE PRODUCTION OF NITRIC ACID
PROCEDE D'ELIMINATION DE N2O LORS DE LA FABRICATION D'ACIDE NITRIQUE

(30) Priorität: 23.06.2003 DE 10328278
(43) Veröffentlichungstag der Anmeldung: 29.03.2006
(73) Patentinhaber: BASF SE, 67056 Ludwigshafen (DE)
(72) Erfinder: WESSEL, Helge, 68167 Mannheim (DE); KOTREL, Stefan, 67071 Ludwigshafen (DE); BENDER, Michael, 67063 Ludwigshafen (DE)
(86) Internationale Anmeldenummer: PCT/EP2004/006162
(87) Internationale Veröffentlichungsnummer: WO 2005/000738

(56) Entgegenhaltungen:
- WO-A-01/87771
- WO-A-99/07638
- WO-A-02/092196
- US-A- 5 478 549

## Beschreibung

Die Erfindung betrifft Verfahren zur Entfernung von N₂O bei der Salpetersäureherstellung durch beschichtete Drahtgewebe aus hochtemperaturstabilen Werkstoffen.

Bei der großtechnischen Herstellung von Salpetersäure z.B, nach dem Ostwald-Verfahren (Ullmann's Encyclopedia of Industrial Chemistry, 5. Auflage, Band A 17, Seiten 293 bis 339 (1991)) entsteht bei der Verbrennung von Ammoniak mit Sauerstoff an einem edelmetallhaltigen Katalysator neben Stickstoffmonoxid und Stickstoffdioxid (beziehungsweise Distickstofftetroxid) in der Regel auch N₂O (Distickstoffmonoxid) als Nebenprodukt. Im Gegensatz zu den anderen gebildeten Stickoxiden wird N₂O im Laufe des Absorptionsverfahrens nicht vom Wasser absorbiert. Wird keine weitere Stufe zur Entfernung des "Treibhausgases" N₂O vorgesehen, so findet es sich im Abgas wieder.

Aus der US-A-5,478,549 ist ein Verfahren zur Herstellung von Salpetersäure nach Ostwald bekannt, bei dem der Gehalt an N₂O dadurch vermindert wird, dass nach der Oxidation der Gasstrom bei einer Temperatur von mindestens 600°C über ein Katalysatorbett aus Zirkoniumoxid in Form zylindrischer Pellets, angeordnet unterhalb des Edelmetall-Rückgewinnungsnetzes, geführt wird.

Aus der DE-A-198 05 202 und der DE-A-198 19 882 sind Katalysatoren, in geometrischen Formen wie z.B. Pellets, Zylinder oder Stränge, zur katalytischen Zersetzung von N₂O bei der großtechnischen Herstellung von Salpetersäure bekannt.

WO 01/28665 beschreibt einen Katalysator, bestehend aus einem horchtemperaturstabilen Drahtgewebe und beschichtet mit katalytisch aktiven Materialien für die Zersetzung von Stickoxiden. Als Drahtgewebe wird Hastelloy X angegeben, das eine Ni/Cr/Fe/...-Legierung ist, die kein Al enthält. Aus der Beschreibung ist zu entnehmen, dass es sich hier um ein DeNOx-Verfahren mittels SCR (Selective Catalytic Reduction) in Gegenwart eines Reduktionsmittels wie Ammoniak handelt. Obwohl N₂O in WO 01/28665 neben den anderen Stickoxiden als NOx verstanden wird, sind der Beschreibung keinerlei Hinweise für einen N₂O-Abbau zu entnehmen, weder bezüglich einsetzbarer katalytisch aktiver Komponenten noch hinsichtlich der Reaktionsbedingungen. Die insbesondere angegebenen Vanadiumoxid-Katalysatoren können nach einschlägigem Fachwissen kein N₂O abbauen, auch nicht in Gegenwart von NH₃.

Die bislang bekannten Katalysatoren haben den Nachteil, dass sie in Form kompakter Schüttungen einzelner Katalysatorformkörper vorliegen, deren Gasdurchlässigkeit nicht gezielt eingestellt werden kann (Druckabfall und hohe mechanische und statische Belastung).

Der vorliegenden Erfindung lag daher die Aufgabe zugrunde, den zuvor genannten Nachteilen abzuhelfen.

Demgemäß wurden neues und verbessertes Verfahren zur Entfernung von N₂O bei der Salpetersäureherstellung gefunden, welches dadurch gekennzeichnet ist, daß man als Katalysatoren mit katalytisch aktiven Materialien beschichtete Drahtgewebe aus hochtemperaturstabilen Werkstoffen einsetzt.

Als Material für die Drahtgewebe eignen sich alle hochtemperaturstabilen Werkstoffe, welche Fe-Cr-Al-Legierungen enthalten, bevorzugt Kanthal (Werkstoffnummer 1,4767).

Die Drahtgewebe können in beliebiger Form, beispielsweise als Gewebe, als Gewebeschichten oder als Gewebepackungen eingesetzt werden. Gewebepackungen lassen sich wie folgt herstellen:

Gewebepackungen lassen sich zum Beispiel auf einfache Weise, durch Aufwickeln oder Aufeinanderlegen von zwei oder mehreren unterschiedlich strukturierten Bahnen der Gewebebahnen als Raumkörper herstellbar, die weitgehend dem Reaktorquerschnitt anpassbar sind. Unter weitgehend wird vorliegend verstanden, dass keine exakte Anpassung an den Kolonnenquerschnitt erforderlich ist, sondern dass fertigungstechnische Toleranzen ertaubt sind.

Die Packung ist vorwiegend als Rolle ausgebildet, die durch Aufwickeln von zwei oder mehreren unterschiedlich strukturierten Bahnen der Gewebebahnen erhalten wurde. Möglich sind jedoch auch andere geometrische Formen, insbesondere eine durch Aufeinanderlegen von Bahnen erhaltene Quaderform.

Der Draht der Gewebe bzw. Gewebepackungen hat in der Regel einen Durchmesser von 5 bis 5.000 µm, bevorzugt 50 bis 500 µm, besonders bevorzugt 60 bis 400 µm, insbesondere 70 bis 250 µm und in der Regel eine Maschenweite von 5 bis 5.000 µm. bevorzugt 50 bis 750 µm, besonders bevorzugt 60 bis 600 µm, insbesondere 70 bis 450 µm.

Als katalytisch aktive Materialien eignen sich Oxide wie z.B. MgO, CoO, MoO₃, NiO, ZnO, Cr₂O₃, WO₃, SrO, CuO/Cu₂O, MnO₂ oder V₂O₅, Mischoxide wie CuO-ZnO-Al₂O₃, CoO-MgO, CoO-La₂O₃, La₂Cu_{4.}Nd₂CuO₄, Co-ZnO, oder NiO-MoO₃, Perovskite wie LaMnO₃, CoTiO₃, LaTiO₃, CoNiO₃ und Spinelle wie CuAl₂O₄, ZnAl₂O₄. MgAl₂O₄. (Cu, Zn) Al₂O₄. (Cu, Zn, Mg) Al₂O₂, (Cu, Zn, Ba) Al₂O₄, (Cu, Zn, Ca) Al₂O₄, La₂NiO₄, bevorzugt Spinelle wie CuAl₂O₄, ZnAl₂O₄, MgAl₂O₄, (CuZn) Al₂O₄, (CuZnMg) Al₂O₄, (CuZnBa)-Al₂O₄, (CuZnCa) Al₂O₄, besonders bevorzugt Spinelle wie CuAl₂O₄, (CuZn) Al₂O₄, (CuZnMg) Al₂O₄.

Vorzugsweise weist das katalytisch aktive Material 0,1 bis 30 Gew.-% CuO, 0,1 bis 40 Gew.-% des weiteren Metalloxids, insbesondere ZnO und 50 bis 80 Gew.-% Al₂O₃ auf.

Besonders bevorzugt ist ein katalytisch aktives Material, das aus etwa 8 Gew.-%,CuO, 30 Gew.-% ZnO und 62 Gew.-% Al₂O₃ aufgebaut ist. Neben dem Spinell liegen dabei möglichst geringe Mengen an CuO und weiterem Metalloxid vor. Vorzugsweise liegen maximal 3,5 Gew.-% CuO und maximal 10 Gew.-% ZnO vor.

Die Herstellung der katalytisch aktiven Materialien ist allgemein bekannt oder kann durch allgemein bekannte Verfahren zur Herstellung dieser Materialien bewerkstelligt werden.

Die Beschichtung des Drahtes der Gewebe bzw. Gewebepackungen kann wie folgt durchgeführt werden:

Vor der Beschichtung kann der Draht der Gewebe bzw. Gewebepackungen z.B. bei Temperaturen von 100 bis 1500°C, bevorzugt bei 200 bis 1400°C, besonders bevorzugt bei 300 bis 1300°C getempert werden.

Die Beschichtung kann vor oder nach, bevorzugt nach der Formgebung zu Gewebepackungen erfolgen.

Die Beschichtung mit katalytisch aktiven Materialien kann durch Aufdampfen. Sputtern, Tränken, Tauchen, Besprühen oder Beschichten mit Pulvern, bevorzugt mit einer wässrigen und/oder alkoholische Lösung oder Suspension, bevorzugt mit einer wässrigen Suspension erfolgen.

Der Feststoffgehalt der Suspension liegt in der Regel zwischen 2 und 95 %, bevorzugt zwischen 3 und 75 %, besonders bevorzugt zwischen 5 und 65 %.

Nach der Beschichtung werden die Katalysatorpackungen in der Regel bei Temperaturen von 100 bis 1500°C, bevorzugt 200 bis 1300°C, besonders bevorzugt bei 300 bis 1100°C getempert.

Das Gewichtsverhältnis von Beschichtung zum Draht kann in weiten Grenzen variiert werden und liegt in der Regel bei 0,01:1 bis 10:1, bevorzugt 0,1:1 bis 2:1. besonders bevorzugt 0,3:1 bis 1:1.

Das erfindungsgemäße Drahtgewebe kann an beliebiger Stelle des Reaktors zur Salpetersäureherstellung nach der Herstellung der Stickoxide platziert werden, bevorzugt in einem Bereich, in dem die Temperatur zwischen 500 und 980°C, bevorzugt 600 und 970°C, besonders bevorzugt 700 und 960°C, insbesondere auf dem Temperaturniveau der vorangegangenen Ammoniakoxidation bei einem Druck von 1 bis 15 bar liegt, besonders bevorzugt zwischen dem, ggf. mit einem Edelmetall-Rückgewinnungsnetz versehenen, Edelmetallnetzkatalysator und dem Wärmetauscher.

Die Drahtgewebe werden in der Regel als Festbettpackung eingesetzt. Die Höhe des Katalysatorbetts beträgt in der Regel 1 bis 150 cm, bevorzugt 2 bis 50 cm, besonders bevorzugt 5 bis 10 cm. Die Verweitzeit am Katalysatorbett ist im Normalbetrieb in der Regel kleiner als 1 sec., bevorzugt kleiner als 0,5 sec., besonders bevorzugt kleiner als 0,3 s.

Die erfindungsgemäßen Drahtgewebe können in Reaktoren zur katalytischen Oxidation von Ammoniak zu Stickoxiden, die in Flussrichtung in dieser Reihenfolge einen Edelmetallkatalysator, gegebenenfalls ein Edelmetall-Rückgewinnungsnetz und Wärmetauscher enthalten zwischen Edelmetallkatalysator/gegebenenfalls Edelmetall-Rückgewinnungsnetz und Wärmetauscher angeordnet werden.

Die Vorrichtung zur Herstellung von Salpetersäure aus Ammoniak, umfasst in dieser Reihenfolge
a) einen Reaktor gemäß vorangestelltem Absatz,
b) eine Absorptionseinheit zur Absorption von Stickoxiden in einem wässrigen Medium und gegebenenfalls
c) eine Reduktionseinheit zur selektiven katalytischen Reduktion von Stickoxiden.

### Beispiele

### Herstellungsbeispiel 1

Ein Kanthal-Metallgewebe-Band (Länge 100 cm, Breite 3,7 cm), Werkstoffnummer 1.4767 (Fa. Montz GmbH, D-40705 Hilden) wurde 4 h bei 900°C an der Luft geglüht und anschließend mit einer Zahnradwalze (Modul 1,0mm) gewellt und mit einem 97cm langen, glatten Metallgewebeband aufgerollt, so dass ein Packung mit senkrechten Kanälen mit einem Durchmesser von 4,1 cm entstand. Die so erhaltene Packung wurde mit einer Suspension aus 100 g Disperal® Al25 (Fa. Sasol), 100 g Wasser und 25 g katalytisch aktives Pulver der Zusammensetzung 20 Gew.% ZnO, 16 Gew.-% CuO, 64 Gew.% Al₂O₃ getränkt, bei 120°C für 2 h getrocknet und 12 h an der Luft bei 950°C getempert. Die Gewichtszunahme der Packung durch die Tränkung betrug nach dem Glühen 11,6%.

### Herstellungsbeispiel 2

Analog Herstellbeispiel 1 wurde ein Kanthal-Metallgewebe-Band behandelt. Von diesem Metallgewebe-Band wurden 16,7 cm lange und 2 cm breite Stücke mit einer Zahnradwalze (Modul 1,0 mm) gewellt und auf einander gelegt, so dass ein 7 cm langer, quaderförmiger Monolith mit senkrechten Kanälen und einer Höhe und Breite von 2 cm entstand und mit 3 V2A-Drähten zusammengebunden. Die so erhaltene Packung wurde mit einer Suspension aus 100 g Disperal® Al25 (Fa. Sasol), 100 g Wasser und 25 g katalytisch aktives Pulver der Zusammensetzung 20 Ges.-% ZnO, 16 Gew.-% CuO, 64 Gew.% Al₂O₃ getränkt, bei 120°C für 2 h getrocknet und 12 h an der Luft auf 900°C getempert. Die Gewichtszunahme der Packung durch die Tränkung betrug nach dem Glühen 13,4 %.

### Beispiel 1

In einer Laborapparatur wurde Ammoniak in einem Ammoniak-Luftgemisch mit einer Konzentration von 12 Vol.-% Ammoniak und 88 Vol:% Luft an einem Pt/Rh-Netz mit einer Belastung von 36 g/h Ammoniak pro cm³ Netzfläche bei einer Temperatur von 900°C zu Stickstoffmonoxid umgesetzt. Unmittelbar hinter dem Platinnetz war eine 10 cm hohe Schicht des Katalysators aus Herstellungsbeispiel 1 angeordnet, die das Reaktionsgas bei einer Temperatur von 800°C mit einer Verweilzeit von ca. 0,03 s durchströmte. Der Abbau an N₂O betrug 92 % (Vol.-%). Der Druckabfall über der Katalysatorschüttung betrug 250 mbar.

### Beispiel 2

Analog Beispiel 1 wurde der Katalysators aus Herstellungsbeispiel 2 eingesetzt. Der Abbau an N₂O betrug 90 % (Vol.-%). Der Druckabfall über der Katalysatorschüttung betrug 192 mbar.

Vergleichsbeispiel 1 (analog Beispiel 1 aus DE-A-198 19 882)

Die Reaktionsdurchführung erfolgte analog Beispiel 1. Es wurde jedoch unmittelbar hinter dem Platinnetz eine 10 cm hohe Schicht eines Katalysators aus 18 Gew.-% CuO, 20 Gew.-% ZnO und 62 Gew.-% Al₂O₃ in Form von 3-mm-Strängen eingesetzt. Der Abbau an N₂O betrug 85 % (Vol-%). Der Druckabfall über der Katalysatorschüttung betrug 1450 mbar.

Vergleichsbeispiel 2 (analog Beispiel 1 aus DE-A-198 19 882)

Aufbau und Reaktion erfolgte analog Vergleichsbeispiel 1 jedoch wurden 6-mm-Stränge eingesetzt. Der Abbau an N₂O betrug 80 % (Vol.-%). Der Druckabfall über der Katalysatorschüttung betrug 1345 mbar.

## Patentansprüche

1. Verfahren zur Entfernung von N₂O bei der Salpetersäureherstellung, **dadurch gekennzeichnet, dass** man als Katalysatoren mit katalytisch aktiven Materialien beschichtete Drahtgewebe aus hochtemperaturstabilen Werkstoffen, enthaltend Fe-Cr-Al-Legierungen, einsetzt und diese Katalysatoren im Reaktor zur katalytischen Oxidation von Ammoniak zu Stickoxiden nach dem Edelmetallkatalysator angeordnet sind.

2. Verfahren zur Entfernung von N₂O bei der Salpetersäureherstellung, **dadurch gekennzeichnet, daß** die Drahtgewebe, die mit katalytisch aktiven Materialien beschichtet sind, aus Fe-Cr-Al-Legierungen bestehen.

3. Verfahren zur Entfernung von N₂O bei der Salpetersäureherstellung nach Anspruch 1 oder 2, **dadurch gekennzeichnet, dass** der Draht bzw. die Drahtgewebe aus hochtemperaturstabilen Werkstoffen vor der Beschichtung bei 100 bis 1500 °C getempert werden.

4. Verfahren zur Entfernung von N₂O bei der Salpetersäureherstellung nach einem der Ansprüche 1, 2 oder 3, **dadurch gekennzeichnet, daß** das mit katalytisch aktiven Materialien beschichtete Drahtgewebe ein Katalysatorbett mit einer Höhe von 1 bis 150 cm ausbildet.

5. Verfahren zur Entfernung von N₂O bei der Salpetersäureherstellung nach einem der Ansprüche 1, 2, 3 oder 4, **dadurch gekennzeichnet, daß** die Temperatur an dem mit katalytisch aktiven Materialien beschichteten Drahtgewebe zwischen 500 und 980°C liegt.

6. Verfahren zur Entfernung von N₂O bei der Salpetersäureherstellung nach einem der Ansprüche 1, 2, 3, 4 oder 5, **dadurch gekennzeichnet, daß** die Verweilzeit an dem mit katalytisch aktiven Materialien beschichteten Drahtgewebe kleiner als 1 sec. beträgt.

7. Katalysatoren zur Entfernung von N₂O bei der Salpetersäureherstellung, **dadurch gekennzeichnet, daß** diese aus einem mit katalytisch aktiven Materialien beschichteten Drahtgewebe, enthaltend Fe-Cr-Al-Legierungen, aus hochtemperaturstabilen Werkstoffen aufgebaut sind.

8. Reaktor zur katalytischen Oxidation von Ammoniak zu Stickoxiden, der in Flussrichtung in dieser Reihenfolge einen Edelmetallkatalysator, gegebenenfalls ein Edelmetall-Rockgewinnungsnetz und Wärmetauscher enthält, **dadurch gekennzeichnet, daß** zwischen Edelmetalikatalysator/gegebenenfalls Edelmetall-Rückgewinnungsnetz und Wärmetauscher ein mit katalytisch aktiven Materialien beschichtetes Drahtgewebe aus hochtemperaturstabilen Werkstoffen, enthaltend Fe-Cr-Al-Legierungen, angeordnet ist.

9. Vorrichtung zur Herstellung von Salpetersäure aus Ammoniak, umfassend in dieser Reihenfolge
a) einen Reaktor gemäß Anspruch 8,
b) eine Absorptionseinheit zur Absorption von Stickoxiden in einem wässrigen Medium und gegebenenfalls
c) eine Reduktionseinheit zur selektiven katalytischen Reduktion von Stickoxiden.

## Claims

1. A process for removing N₂O in nitric acid manufacture, which comprises utilizing catalysts comprising wire wovens coated with catalytically active materials and composed of high-temperature-stable materials, comprising Fe-Cr-Al alloys, and said catalysts being disposed downstream of the noble metal catalyst in the reactor for catalytic oxidation of ammonia to nitrogen oxides.

2. A process for removing N₂O in nitric acid manufacture, wherein the wire wovens coated with catalytically active materials consist of Fe-Cr-Al alloys.

3. The process for removing N₂O in nitric acid manufacture according to claim 1 or 2 wherein the wire or the wire wovens composed of high-temperature-stable materials are heat treated at from 100 to 1500°C prior to coating.

4. The process for removing N₂O in nitric acid manufacture according to any of claims 1, 2 or 3 wherein the wire woven coated with catalytically active materials forms a catalyst bed from 1 to 150 cm deep.

5. The process for removing N₂O in nitric acid manufacture according to any of claims 1, 2, 3 or 4 wherein the temperature at the wire woven coated with catalytically active materials is in the range from 500 to 980°C.

6. The process for removing N₂O in nitric acid manufacture according to any of claims 1, 2, 3, 4 or 5 wherein the residence time over the wire woven coated with catalytically active materials is less than 1 second.

7. A catalyst for removing N₂O in nitric acid manufacture, constructed of a wire woven, comprising Fe-Cr-Al alloys, composed of high-temperature-stable materials and coated with catalytically active materials.

8. A reactor for catalytic oxidation of ammonia to nitrogen oxides which comprises a noble metal catalyst, optionally a noble metal recovery network and a heat exchanger in the stated order in the flow direction, **characterized in that** a wire woven coated with catalytically active materials and composed of high-temperature-stable materials, comprising Fe-Cr-Al alloys, is disposed between the noble metal catalyst/optional noble metal recovery gauze and the heat exchanger.

9. Apparatus for producing nitric acid from ammonia, comprising in the stated order
a) a reactor according to claim 8,
b) an absorption unit for absorbing nitrogen oxides in an aqueous medium, and optionally
c) a reduction unit for selective catalytic reduction of nitrogen oxides.

## Revendications

1. Procédé d'élimination de N₂O lors de la fabrication d'acide nitrique, **caractérisé en ce que** des toiles métalliques en des matériaux stables aux températures élevées, contenant des alliages de Fe-Cr-Al, revêtues avec des matériaux catalytiquement actifs, sont utilisées en tant que catalyseurs et ces catalyseurs sont placés après le catalyseur à base de métal noble dans le réacteur pour l'oxydation catalytique d'ammoniac en oxydes d'azote.

2. Procédé d'élimination de N₂O lors de la fabrication d'acide nitrique, **caractérisé en ce que** les toiles métalliques qui sont revêtues avec des matériaux catalytiquement actifs sont constituées d'alliages de Fe-Cr-Al.

3. Procédé d'élimination de N₂O lors de la fabrication d'acide nitrique selon la revendication 1 ou 2, **caractérisé en ce que** le fil métallique ou les toiles métalliques en matériaux stables aux températures élevées sont chauffés à une température de 100 à 1 500 °C avant le revêtement.

4. Procédé d'élimination de N₂O lors de la fabrication d'acide nitrique selon l'une quelconque des revendications 1, 2 ou 3, **caractérisé en ce que** la toile métallique revêtue avec des matériaux catalytiquement actifs forme un lit catalytique d'une hauteur de 1 à 150 cm.

5. Procédé d'élimination de N₂O lors de la fabrication d'acide nitrique selon l'une quelconque des revendications 1, 2, 3 ou 4, **caractérisé en ce que** la température sur la toile métallique revêtue avec des matériaux catalytiquement actifs est comprise entre 500 et 980 °C.

6. Procédé d'élimination de N₂O lors de la fabrication d'acide nitrique selon l'une quelconque des revendications 1, 2, 3, 4 ou 5, **caractérisé en ce que** le temps de séjour sur la toile métallique revêtue avec des matériaux catalytiquement actifs est inférieur à 1 s.

7. Catalyseurs pour l'élimination de N20 lors de la fabrication d'acide nitrique, **caractérisés en ce que** ceux-ci sont formés à partir d'une toile métallique, contenant des alliages de Fe-Cr-Al, en des matériaux stables aux températures élevées, revêtue avec des matériaux catalytiquement actifs.

8. Réacteur pour l'oxydation catalytique d'ammoniac en oxydes d'azote, qui contient dans la direction d'écoulement dans cet ordre un catalyseur à base de métal noble, éventuellement une grille de récupération de métal noble et un échangeur de chaleur, **caractérisé en ce qu'**une toile métallique en matériaux stables aux températures élevées, contenant des alliages de Fe-Cr-Al, revêtue avec des matériaux catalytiquement actifs, est placée entre le catalyseur à base de métal noble/éventuellement la grille de récupération de métal noble et l'échangeur de chaleur.

9. Dispositif pour la fabrication d'acide nitrique à partir d'ammoniac, comprenant dans cet ordre
a) un réacteur selon la revendication 8,
b) une unité d'absorption pour l'absorption d'oxydes d'azote dans un milieu aqueux et éventuellement
c) une unité de réduction pour la réduction catalytique sélective d'oxydes d'azote.
